# EUROPÄISCHE PATENTSCHRIFT

(11) **EP 1 595 746 B1**
(45) Veröffentlichungstag und Bekanntmachung des Hinweises auf die Patenterteilung: **06.06.2007**
(21) Anmeldenummer: 05010117.9
(22) Anmeldetag: 10.05.2005
(51) Int. Cl.: B60R 5/04

(54) **Flächengebilde für eine Laderaumabdeckung eines Kraftfahrzeuges**
Vehicle luggage compartment cover
Ecran de recouvrement de compartiment à bagages

(30) Priorität: 11.05.2004 DE 202004007744 U
(43) Veröffentlichungstag der Anmeldung: 16.11.2005
(73) Patentinhaber: REUM GmbH & Co. Betriebs KG, 74736 Hardheim (DE)
(72) Erfinder: Kreile, Holger, 63820 Elsenfeld (DE)
(74) Vertreter: Maser, Jochen

(56) Entgegenhaltungen:
- DE-C1- 10 218 838
- DE-C1- 19 707 676
- DE-U1- 20 217 717

## Beschreibung

Die Erfindung betrifft ein Flächengebilde für eine Laderaumabdeckung eines Kraftfahrzeuges mit einer Durchgriffsöffnung, die durch ein Abdeckelement zumindest teilweise verschließbar ist, welche zwischen einer wenigstens die Durchgriffsöffnung freigebenden Auslenkposition und einer die Durchgriffsöffnung abdeckenden Schließposition bewegbar ist.

Aus der DE 197 07 676 C1 ist eine Laderaumabdeckung für Kraftfahrzeuge bekannt. Die ausziehbare Laderaumabdeckung weist an ihrem ausziehseitigen Stirnbereich ein Flächengebilde in Form eines Konturteils auf, in dem eine Durchtrittsöffnung vorgesehen ist. Durch das manuelle Eingreifen in die Durchtrittsöffnung ist ermöglicht, die Laderaumabdeckung aus einer Ruheposition in eine Gebrauchsposition zum Abdecken des Laderaums überzuführen. Die Durchtrittsöffnung ist mit einem schwenkbeweglichen Abdeckelement versehen, um den Einblick durch die Durchtrittsöffnung hindurch in den unterhalb der Laderaumabdeckung befindlichen Laderaum zu ermöglichen. Dieses Abdeckelement ist durch Federkraft gegen eine Unterseite eines Randes der Durchtrittsöffnung gehalten. Der Rand der Durchtrittsöffnung bildet einen Anschlag für das Abdeckelement. Die Durchgangsöffnung wird beim entsprechenden Eingreifen durch Finger einer Hand einer Bedienperson von oben zwangsläufig nach unten weggedrückt, wodurch das Konturteil im Bereich der Durchtrittsöffnung ergriffen werden kann. Nach dem Gebrauch und dem Herausnehmen der Finger aus der Durchtrittsöffnung erfolgt ein selbständiges Verschließen der Durchtrittsöffnung durch das Abdeckelement. Das Abdeckelement ist durch eine Lagerachse schwenkbar angelenkt und wird über ein Federelement in einer Schließposition gehalten. Die Anzahl der Bauteile und die Montage ist aufwändig.

Aus der DE 102 18 838 C1 ist ein Flächengebilde mit einer Durchgriffsöffnung bekannt, welche durch ein bewegliches Abdeckelement zumindest teilweise verschließbar ist. Das Abdeckelement weist eine kleinere Grundfläche auf als eine freie Durchgriffsöffnung. Das Abdeckelement ist als frei durch die Durchgriffsöffnung hindurch schwenkbare, zu beiden Seiten der Durchgriffsöffnung hin auslenkbare Abdeckklappe ausgestaltet. Zur Positionierung der Abdeckklappe in einer Schließposition sind für beide Schwenkrichtungen Rückstellmittel erforderlich, welche durch Federelemente ausgebildet sind. Diese Federmittel sind als Torsionsfedern ausgebildet, die an einem separat an der Abdeckklappe angreifenden Achsstummel zur schwenkbaren Lagerung der Abdeckklappe vorgesehen sind.

Der Erfindung liegt die Aufgabe zugrunde, ein Flächengebilde der eingangs genannten Art zu schaffen, das einen einfachen Aufbau zum Verschließen der Durchgriffsöffnung ermöglicht.

Diese Aufgabe wird erfindungsgemäß dadurch gelöst, dass zumindest ein Abdeckelement einen biegeelastischen Bereich aufweist, der die mechanischen Bauteile zumindest teilweise ersetzt. Der biegeelastische Bereich ermöglicht ein einfaches und komfortables manuelles Eingreifen und Herausnehmen der Hand aus der Durchgriffsöffnung. Durch den elastischen Bereich wird das Abdeckelement aufgrund des Eingriffs mit der Hand aus einer Schließposition in eine Auslenkposition übergeführt. Nach dem Überführen der Laderaumabdeckung in eine Ruhelage oder eine den Laderaum abdeckende Position erfolgt ein selbständiges Rückkehren des Abdeckelementes in die Schließposition durch die Rückstellkräfte, welche beim Auslenken im biegeelastischen Bereich aufgebaut werden.

Nach einer vorteilhaften Ausgestaltung der Erfindung ist vorgesehen, dass das zumindest eine Abdeckelement einem die Durchtrittsöffnung zumindest teilweise umgebenden Rahmen aus thermoplastischem oder duroplastischem Material zugeordnet ist. Dieser Rahmen greift in der Durchtrittsöffnung am Flächengebilde an und positioniert das zumindest eine Abdeckelement in der Durchtrittsöffnung. Zur sicheren Aufnahme und Fixierung ist de Rahmens zur Durchtrittsöffnung ist dieser aus thermoplastischem oder duroplastischem Material hergestellt.

Das zumindest eine Abdeckelement ist nach einer ersten Ausführungsform der Erfindung zumindest abschnittsweise im Bereich der freien Durchgriffsfläche biegeelastisch ausgebildet. Das Abdeckelement ist somit in sich verformbar ausgebildet, so dass beim Eingriff einer Hand in die Durchtrittsöffnung lediglich der Bereich ausgelenkt wird, der durch die Finger einer Hand zwangsläufig verdrängt wird. Gleichzeitig ist dadurch ein gefahrloses Herausnehmen der Hand möglich ohne dass eine Verletzungsgefahr durch das in die Schließposition zurückdrängende Abdeckelement bestehen könnte.

Das zumindest eine im Bereich der Durchgriffsöffnung biegeelastische Abdeckelement ist nach einer bevorzugten Ausgestaltung der Erfindung in dem zumindest teilweise die Durchgriffsöffnung umgebenden Rahmen durch eine lösbare oder unlösbare Verbindung vorgesehen. Die lösbare Verbindung kann beispielsweise durch eine Klemm- oder Schraubverbindung erfolgen. Als unlösbare Verbindung kann eine Klebe-, Press- oder Schweißverbindung vorgesehen sein. Durch das Verbinden des Abdeckelementes mit dem zumindest abschnittsweise die Durchgriffsöffnung umgebenden Rahmen ist eine variable Ausgestaltung und Auswahl der Materialien für ein Abdeckelement und den Rahmen gegeben.

Nach einer weiteren alternativen Ausgestaltung der Erfindung ist vorgesehen, dass das zumindest eine Abdeckelement und ein die Durchtrittsöffnung zumindest teilweise umgebender Rahmen durch einen biegeelastischen Bereich miteinander verbunden sind. Dadurch kann eine Vereinfachung des Aufbaus gegeben sein. Beispielsweise werden zum Verschließen der Durchtrittsöffnung gegen unerwünschte Einblicke in den abgedeckten Laderaum ein Rahmenteil sowie ein an einem Rahmenteil angeordnetes Abdeckelement benötigt, die aus einem Teil bestehen, um die Durchgriffsöffnung zu verschließen. Eine kostengünstige Ausgestaltung und schnelle Montage ist hierdurch gegeben.

Vorteilhafterweise ist vorgesehen, dass der biegeelastische Bereich zwischen dem Abdeckelement und dem Rahmen als Gelenkverbindung, insbesondere als Filmscharnier, ausgebildet ist. Dadurch kann in einfacher Weise die Einteiligkeit zwischen dem Abdeckelement und dem Rahmen und eine standfeste Verbindung gegeben sein.

Nach einer weiteren vorteilhaften Ausgestaltung der alternativen Ausführungsform der Erfindung ist vorgesehen, dass das zumindest eine Abdeckelement mit einem oberen oder unteren Teil eines Rahmens verbunden ist. In Abhängigkeit der ästhetischen Gestaltung als auch der Größe der Durchtrittsöffnung kann der biegeelastische Bereich zwischen dem zumindest einen Abdeckelement und der Durchtrittsöffnung zumindest abschnittsweise umgebenden Rahmen am oberen oder unteren Teil vorgesehen werden.

Das zumindest eine Abdeckelement wird bevorzugt durch zumindest ein Rückstellmittel in einer Schließposition gehalten. Das Rückstellmittel greift vorteilhafterweise an dem Rahmen, dem biegeelastischen Bereich und/oder dem Abdeckelement an. Durch das Rückstellmittel kann die Einnahme der Schließposition nach dem Freigeben der Auslenkposition durch Herausnahme der Hand aus der Durchgriffsöffnung unterstützt werden. Beispielsweise kann vorgesehen sein, dass an dem Rahmen ein Rückstellmittel durch eine lösbare oder unlösbare Verbindung angebracht ist, welches auf eine Unterseite des Abdeckelementes wirkt. Alternativ kann vorgesehen sein, dass in dem biegeelastischen Bereich, beispielsweise im Übergang zwischen dem Abdeckelement und dem Rahmen, eine Verdickung oder Verstärkung vorgesehen ist, wodurch das Abdeckelement selbstständig in die Schließposition übergeführt wird. Ebenso kann an dem Abdeckelement ein Rückstellmittel angebracht sein, welches bei Auslenken mit dem Rahmen zusammenwirkt und ein Rücksetzen in die Schließposition bewirkt. Es versteht sich, dass auch beliebige Kombinationen hiervon vorgesehen sein können.

Das Rückstellmittel ist bevorzugt aus einem biegeelastischen oder gummielastischen Material hergestellt, welches in Abhängigkeit der Größe des zumindest einen Abdeckelementes in der Härte ausgewählt ist. Bevorzugt weisen die Rückstellmittel eine Shorehärte im Bereich von 60 bis 80 Shore auf. Dadurch wird einerseits ein leichtes und komfortables Eingreifen in die Durchgriffsöffnung und andererseits eine Einnahme der Schließposition durch das zumindest eine Abdeckelement sichergestellt.

Das zumindest eine Abdeckelement und das zumindest eine Rahmenteil sind bevorzugt gemäß der ersten oder weiteren alternativen Ausführungsform der Erfindung als ein Spritzgussteil ausgebildet. Durch diese Einteiligkeit ist eine Optimierung der Montage- und Herstellungskosten der Teile gegeben.

Bevorzugt wird ein Ein- oder Mehrkomponenten-Spritzgussverfahren verwendet, um das zumindest eine Abdeckelement und den die Durchtrittsöffnung zumindest teilweise umgebenden Rahmen herzustellen. Dadurch kann der Rahmen mit einem härteren Material hergestellt sein und gleichzeitig eine einteilige Anbindung des Abdeckelementes über einen biegeelastischen Bereich oder die Ausgestaltung des Abdeckelementes im Bereich der freien Durchgriffsfläche als biegeelastischer Bereich gegeben sein. Ebenso kann auch vorgesehen sein, dass nur ein Teil der Durchgriffsfläche des Abdeckelementes durch einen biegeelastischen Bereich ausgebildet ist und eine Gelenkverbindung zwischen dem Abdeckelement und dem Rahmen als biegeelastischer Bereich vorgesehen ist.

Durch den Einsatz eines Kunststoff-Spritzgussverfahrens ist vorteilhafterweise ermöglicht, dass zumindest auf der Oberseite des Abdeckelementes und des Rahmens eine an das Flächegebilde angepasste Beschichtung aufbringbar ist. Dadurch kann die Durchgriffsöffnung an ästhetische Ansprüche angepasst werden. Beispielsweise kann die Oberfläche lackiert oder mit einer dem Flächengebilde entsprechenden Folie oder Planware versehen sein, so das die geschlossene Durchtrittsöffnung mit dem Flächengebilde harmoniert.

Zur einfachen Montage des zumindest einen Abdeckelementes und einem oberen und unteren Rahmenteil ist vorgesehen, dass die Rahmenteile durch eine lösbare oder unlösbare Verbindung zum Flächengebilde fixiert sind. Beispielsweise können lösbare oder unlösbare Rast- oder Schnappverbindungen im Spritzgussverfahren für den Rahmen integriert werden, so dass die Montage ohne zusätzliche Verbindungsmittel ermöglicht ist.

Die Erfindung sowie weitere vorteilhafte Ausführungsformen und Weiterbildungen derselben werden im Folgenden anhand den in den Zeichnungen dargestellten Beispielen näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine teilweise Draufsicht auf eine Oberseite eines erfindungsgemäßen Flächengebildes in Form einer Laderaumabdeckung für Kraftfahrzeuge,
- Figur 2: eine schematische Schnittdarstellung entlang der Linie I-I in Figur 1,
- Figur 3: eine schematische Schnittdarstellung einer alternativen Ausführungsform der Erfindung entlang der Linie I-I in Figur 1,
- Figur 4: eine schematische Schnittdarstellung einer weiteren alternativen Ausführungsform der Erfindung entlang der Linie I-I in Figur 1,
- Figur 5: eine schematische Draufsicht auf eine Oberseite eines weiteren erfindungsgemäßen Flächengebildes in Form einer Laderaumabdeckung für Kraftfahrzeuge,
- Figur 6: eine schematische Schnittdarstellung der Ausführungsform gemäß Figur 5 entlang der Linie V-V und
- Figur 7: eine schematische Schnittdarstellung einer alternativen Ausführungsform der Erfindung entlang der Linie V-V in Figur 5.

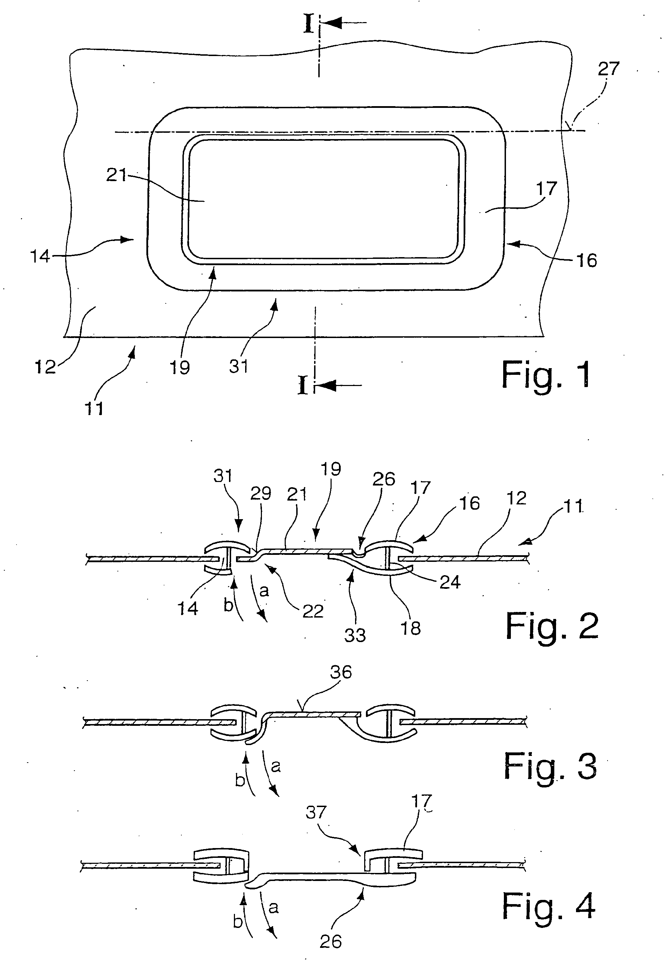

In Figur 1 ist ein Flächengebilde in Form einer Laderaumabdeckung 11 aus einem flexiblen, insbesondere textilen, Werkstoff teilweise dargestellt. Die Laderaumabdeckung 11 ist zur Abdeckung eines Laderaumes vorgesehen, der sich von einer Rückseite einer Rückenlehnenanordnung einer Fondsitzbank bis zur Heckklappe eines Fahrzeuges erstreckt. Die Laderaumabdeckung 11 wird aus einer Ruheposition, in der ein flexibles Flächengebilde auf einer Rollowelle aufgewickelt ist, in eine Funktionsposition zum Abdecken des Laderaumes übergeführt, wobei die Laderaumabdeckung 11 an Halterungen eingehängt wird. An einer vorderen Stirnseite der Laderaumabdeckung 11 ist ein formsteifes Konturteil 12 vorgesehen, welches eine Durchgriffsöffnung 14 aufweist. Die Durchgriffsöffnung 14 ist von einem Rahmen 16 umgeben, der aus einem oberen Rahmenteil 17 und einem unteren Rahmenteil 18 (Figur 2) besteht. Eine durch den Rahmen 16 begrenzte Durchgriffsfläche 19 ist durch ein Abdeckelement 21 verdeckt, welches in einer Schließposition 22 angeordnet ist.

In Figur 2 ist eine Schnittdarstellung entlang der Linie I-I gemäß Figur 1 dargestellt. Das obere und untere Rahmenteil 17, 18 sind bevorzugt durch eine Steck- und Rastverbindung 24 miteinander verbunden und greifen im Randbereich der Durchgriffsöffnung 14 an dem Konturteil 12 an.

Das Abdeckelement 21 ist über einen biegeelastischen Bereich 26 mit dem oberen Rahmenteil 17 verbunden und entlang einer Schwenkachse 27 (Figur 1) gemäß Pfeil a nach unten schwenkbar gelagert. Der biegeelastische Bereich 26 ist beispielsweise als Filmscharnier ausgebildet. Diesem Bereich 26 gegenüberliegend ist an dem Abdeckelement 21 eine Anschlagfläche 29 vorgesehen, welche sich bevorzugt über die gesamte Länge des Rahmenabschnitts 31 erstreckt. Alternativ kann vorgesehen sein, dass die Anschlagfläche 29 auch entlang den seitlichen Rahmenabschnitten bis zur Schwenkachse 27 ausgebildet ist. Dadurch ist das Einnehmen einer definierten Schließposition 22 gegeben. Zusätzlich kann die Durchgriffsfläche 19 vollständig verschlossen sein.

Im Ausführungsbeispiel gemäß Figur 2 greift die Anschlagfläche 29 an dem oberen Rahmenteil 17 an. An dem unteren Rahmenteil 18 dem biegeelastischen Bereich 26 zugeordnet sind Rückstellmittel 33 vorgesehen. Nach dem Herausnehmen der Finger einer Hand aus der Durchgriffsöffnung 14 bzw. der Durchgriffsfläche 19 wird das Abdeckelement 21 aus einer nicht näher dargestellten Auslenkposition durch die Rückstellmittel 33 unterstützt in die Schließposition 22 gemäß Pfeil b übergeführt und in dieser gehalten. Die Rückstellmittel 33 können beispielsweise an das untere Rahmenteil 18 angespritzt sein, so dass in einem Arbeitsschritt die Rückstellmittel 33 und das Rahmenteil 18 hergestellt sind. Alternativ kann das Rückstellmittel 33 durch eine lösbare oder unlösbare Verbindung zum Rahmenteil 18, zum Abdeckelement 21 und/oder zum biegeelastischen Bereich 26 angeordnet sein. Das Rückstellmittel 33 erstreckt sich durchgehend oder abschnittsweise entlang der Schwenkachse. Das Rückstellmittel 33 verjüngt sich vorteilhafterweise im Querschnitt zur freien auslenkbaren Kante des Abdeckelementes 21.

In Figur 3 ist eine alternative Ausführungsform der Erfindung zu den Figuren 1 und 2 dargestellt. In diesem Ausführungsbeispiel greift die an dem Abdeckelement 21 angeordnete Anschlagfläche 29 an dem unteren Rahmenteil 18 an. Der biegeelastische Bereich 26 ist an dem unteren Rahmenteil 18 vorgesehen. Dieser biegeelastische Bereich 26 umfasst gleichzeitig die Rückstellmittel 33, so dass beim Eingriff in die Durchgriffsfläche 19 und dem Überführen des Abdeckelementes 21 in die Auslenkposition gemäß Pfeil a gleichzeitig Rückstellkräfte aufgebaut werden, die das Abdeckelement 21 selbstständig in eine Schließposition 22 gemäß Pfeil b zurücksetzen.

Bevorzugt ist eine Oberfläche 36 in der Kontur an das obere Rahmenteil angepasst, so dass in einer Schließposition 22 des Abdeckelementes 21 eine geschlossene Oberfläche mit dem oberen Rahmenteil 17 gebildet ist. Der biegeelastische Bereich 26 kann auch an dem oberen Rahmenteil 17 angreifen.

In Figur 4 ist eine weitere alternative Ausführungsform eines erfindungsgemäßen Flächengebildes entlang der Schnittlinie I-I in Figur 1 dargestellt. In diesem Ausführungsbeispiel ist das Abdeckelement 21 selbst zumindest teilweise als biegeelastischer Bereich ausgebildet und geht unmittelbar in einen Abschnitt des unteren Rahmenteils 18 über. Somit kann ein zur Anschlagfläche 26 weisender Bereich und/oder ein Übergangsbereich zum Rahmenteil 18 biegeelastisch ausgebildet sein. Über eine Anschlagfläche 26 greift das Abdeckelement 21 an dem Rahmenteil 18 an. Bevorzugt ist bei dieser Ausführungsform vorgesehen, dass die Rückstellmittel 33, welche durch die Ausbildung der Kontur im Übergangsbereich zwischen dem Rahmenteil 18 und dem Abdeckelement 21 integriert sind, eine Vorspannung aufweisen, so dass nach dem Auslenken des Abdeckelementes 21 ein selbständiges Zurücksetzen sichergestellt ist. Die Rückstellmittel 33 können gemäß der Darstellung integriert sein. Ebenfalls können streifen- oder rippenförmige Versteifungen auf einer Unterseite des Abdeckelementes 21 vorgesehen sein. Der obere Rahmen 17 weist vorteilhafterweise einen umlaufenden Bund 37 auf, welcher den Rahmen 16 zur Durchgriffsfläche 19 schließt.

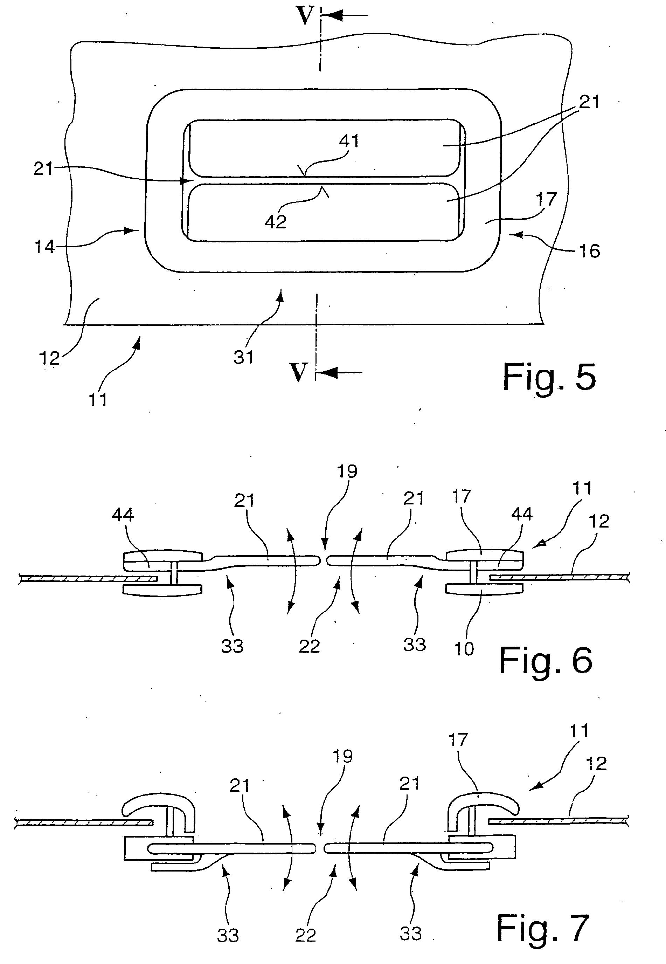

In Figur 5 ist eine schematische Draufsicht auf eine alternative erfindungsgemäße Ausgestaltung eines Flächengebildes gegeben. Die Durchgriffsfläche 14 ist durch zwei Abdeckelemente 21 verschlossen, welche nach einer ersten Ausführungsform gleichlange Schenkel umfassen, deren Stirnseiten 41, 42 durch zwei parallel verlaufende Kanten ausgebildet sind. Alternativ kann vorgesehen sein, dass die Abdeckelemente 21 unterschiedlich lang ausgebildet sind. Des Weiteren kann alternativ vorgesehen sein, dass die stirnseitigen Kanten 41, 42 einen wellenförmigen oder zickzackförmigen Verlauf aufweisen. Ebenso kann alternativ vorgesehen sein, dass diese stirnseitigen Kanten 41, 42 sich zumindest teilweise und/oder abschnittsweise überlappen. Des Weiteren kann alternativ vorgesehen sein, dass mehrere Abdeckelemente 21 die Durchgriffsöffnung 14 verschließen.

In Figur 6 ist eine schematische Schnittdarstellung entlang der Linie V-V in Figur 5 dargestellt. Die Abdeckelemente 21 weisen einen Randbereich 44 auf, der durch eine lösbare oder unlösbare Verbindung mit einer Unterseite am Rahmenteil 17 vorgesehen ist. Ebenso kann der Randbereich 44 auch auf der Außenseite oder Innenseite am unteren Rahmenteil vorgesehen sein. Die Randbereiche 41 können alternativ auch über die Rastverbindungen 21 zum Rahmenteil 17 oder 18 befestigt sein. Bevorzugt sind die Abdeckelemente 21 im vorderen Bereich nahe den stirnseitigen Kanten 41, 42 biegeelastischer ausgebildet als im Bereich nahe dem Rahmenteil 17, 18. Bei dieser Ausführungsform ist eine Durchgriffsmöglichkeit sowohl von einer Oberseite als auch einer Unterseite gegeben. Die Rückstellmittel 33 sind bevorzugt im Übergangsbereich zwischen dem Rahmen 16 und einer freien Schenkellänge des Abdeckelementes 21 integriert oder können durch separate an der Unterseite des Abdeckelementes 21 oder dem Rahmenteil 18 angeordnete elastische Rückstellmittel 33 ausgebildet sein. Beispielsweise kann ein gummielastisches Rückstellmittel 33 an dem Rahmenteil 18 angreifen, um bei einer Auslenkung der stirnseitigen Kante 41 nach unten das Abdeckelement 21 in eine Schließposition 22 überzuführen. Des Weiteren kann vorgesehen sein, dass die stirnseitigen Kanten 41, 42 zwei zueinander komplementär ausgebildete Anschlagflächen aufweisen, um eine definierte Schließposition 22 einzunehmen.

In Figur 7 ist eine schematische Schnittdarstellung entlang der Linie V-V in Figur 5 einer weiteren erfindungsgemäßen Ausgestaltung dargestellt. Die Abdeckelemente 21 können in einem Ein- oder Mehrkomponenten-Spritzgussverfahren an dem Rahmen 18 angespritzt sein. Alternativ kann vorgesehen sein, dass die Abdeckelemente 21 separat zum Rahmenteil 17, 18 hergestellt werden und durch eine Steckverbindung zum Rahmenteil 17 oder 18 fixiert werden. Die Steckverbindung kann durch Schnapp- oder Rastelemente ausgebildet sein oder in Form von Vertiefungen und Wülsten, die ein erschwertes Abziehen der Abdeckelemente 21 vom Rahmenteil 17 oder 18 bewirken. Ebenso kann eine Klebe- oder Schweißverbindung vorgesehen sein. Die Rückstellmittel 33 können beispielsweise als keilförmige Stützen an der Unterseite des Abdeckelementes 21 angreifen.

Zur Herstellung des Rahmens 16 werden bevorzugt spritzgussfähige Materialien eingesetzt, wie PA, PP oder dergleichen. Zur Herstellung der biegeelastischen Bereiche werden beispielsweise Materialien wie TEE, TPE oder dergleichen eingesetzt, die eine Shorehärte von beispielsweise 50 bis 80 Shore aufweisen.

Es versteht sich, dass die einzelnen zu den jeweiligen Ausführungsbeispielen beschriebenen Merkmale jeweils für sich erfindungswesentlich sind und beliebig miteinander kombinierbar sind.

## Patentansprüche

1. Flächengebilde, insbesondere Laderaumabdeckung für eine Kraftfahrzeug, mit einer Durchgriffsöffnung (14), die durch ein Abdeckelement (21) zumindest teilweise verschließbar ist, welches zwischen wenigstens einer die Durchgriffsöffnung (14) freigebenden Auslenkposition und einer die Durchgriffsöffnung (14) abdeckenden Schließposition bewegbar ist, **dadurch gekennzeichnet, dass** das zumindest eine Abdeckelement (21) einen biegeelastischen Bereich (26) aufweist.

2. Flächengebilde nach Anspruch 1 **dadurch gekennzeichnet, dass** das zumindest eine Abdeckelement (21) einem die Durchgriffsöffnung (14) zumindest teilweise umgebenden Rahmen (16) aus thermoplastischem oder duroplastischem Material zugeordnet ist.

3. Flächengebilde nach Anspruch 1 oder 2 **dadurch gekennzeichnet, dass** das zumindest eine Abdeckelement (21) im Bereich einer freien Durchgriffsfläche (19) zumindest teilweise biegeelästisch ausgebildet ist.

4. Flächengebilde nach einem der vorhergehenden Ansprüche, **dadurch gekennzeichnet, dass** das zumindest eine Abdeckelement (21) einen die Durchgriffsöffnung (14) zumindest teilweise umgebenden Rahmen (16) aufweist und durch eine lösbare oder unlösbare Verbindung an dem Rahmen (16) vorgesehen ist.

5. Flächengebilde nach Anspruch 1, **dadurch gekennzeichnet, dass** das zumindest eine Abdeckelement (21) und ein die Durchgriffsöffnung (14) zumindest teilweise umgebender Rahmen (16) durch einen biegeelastischen Bereich (26) miteinander verbunden sind.

6. Flächengebilde nach Anspruch 5, **dadurch gekennzeichnet, dass** der biegeelastische Bereich (26) als Gelenkverbindung, insbesondere als Filmscharnier, ausgebildet ist.

7. Flächengebilde nach einem der vorhergehenden Ansprüche, **dadurch gekennzeichnet, dass** das zumindest eine Abdeckelement (21) mit einem oberen oder unteren Rahmenteil (17, 18) des Rahmens (16) verbunden ist.

8. Flächengebilde nach einem der vorhergehenden Ansprüche, **dadurch gekennzeichnet, dass** das zumindest eine Abdeckelement (21) mit zumindest einem Rückstellmittel (33) in einer Schließposition (22) gehalten ist, welches zumindest an dem Rahmen (16), dem biegeelastischen Bereich (26) oder dem Abdeckelement (21) vorgesehen ist.

9. Flächengebilde nach Anspruch 8, **dadurch gekennzeichnet, dass** das Rückstellmittel (33) aus einem biegeelastischen Material hergestellt ist, welches zumindest an dem Abdeckelement (21), dem Rahmen (16) oder dem biegeelastischen Bereich (26) angespritzt, durch eine Klebe-, Schweiß-, Klemm- oder Steckverbindung angeordnet ist.

10. Flächengebilde nach Anspruch 8 oder 9, **dadurch gekennzeichnet, dass** die Rückstellmittel (33) eine Härte von 50 bis 80 Schore aufweist.

11. Flächengebilde nach einem der vorhergehenden Ansprüche, **dadurch gekennzeichnet, dass** das zumindest eine Abdeckelement (21) und der zumindest teilweise die Durchgriffsöffnung (14) umgebende Rahmen (16) als ein Spritzgussteil ausgebildet ist.

12. Flächengebilde nach einem der vorhergehenden Ansprüche, **dadurch gekennzeichnet, dass** das zumindest eine Abdeckelement (21) und der zumindest teilweise die Durchgriffsöffnung (14) umgebende Rahmen (16) durch ein Ein- oder Mehrkomponenten-Spritzgussverfahren herstellbar ist.

13. Flächengebilde nach einem der vorhergehenden Ansprüche, **dadurch gekennzeichnet, dass** zumindest eine Oberseite des Abdeckelementes (21) oder des Rahmens (16) eine Beschichtung aufweist, welche der entspricht die an die Durchgriffsöffnung (14) angrenzt.

14. Flächengebilde nach Anspruch 13, **dadurch gekennzeichnet, dass** die Oberfläche des zumindest einen Abdeckelementes (21) oder des Rahmens (16) lackiert ist oder eine dem Flächengebilde entsprechende Folie oder Planware aufweist.

15. Flächengebilde nach einem der vorhergehenden Ansprüche, **dadurch gekennzeichnet, dass** ein mit einem Rahmenteil (17, 18) verbundenes Abdeckelement (21) mit einem weiteren Rahmenteil (18, 17) durch eine lösbare oder unlösbare Verbindung zur Durchtrittsöffnung (14) befestigt ist.

## Claims

1. Planar form, especially a vehicle luggage compartment cover, with a reach-through opening (14) which can at least be partially closed by a covering element (21) which is movable between at least one deflecting position releasing the reach-through opening (14) and a closing position covering the reach-through opening (14), **characterized in that** the at least one covering element (21) comprises a flexible area (26).

2. Planar form according to claim 1, **characterized in that** the at least one covering element (21) is allocated to a frame (16) of a thermoplastic or duroplastic material which at least partially surrounds the reach-through opening (14).

3. Planar form according to claim 1 or 2, **characterized in that** the at least one covering element (21) is designed at least partially flexibly in the area of a free reach-through opening (19).

4. Planar form according to any one of the preceding claims, **characterized in that** the at least one covering element (21) comprises a frame (16) at least partially surrounding the reach-through opening (14) and being provided by a detachable or permanent connection on the frame (16).

5. Planar form according to claim 1, **characterized in that** the at least one covering element (21) and a frame (16) at least partially surrounding the reach-through opening (14) are connected with each other by a flexible area (26).

6. Planar form according to claim 5, **characterized in that** the flexible area (26) is designed as a joint connection, especially as a film hinge.

7. Planar form according to any one of the preceding claims, **characterized in that** the at least one covering element (21) is connected with a top or bottom frame part (17, 18) of the frame (16).

8. Planar form according to any one of the preceding claims, **characterized in that** the at least one covering element (21) is held with at least one reset means (33) in a closing position (22) which is provided at least on the frame (16), the flexible area (26) or the covering element (21).

9. Planar form according to claim 8, **characterized in that** the reset means (33) is manufactured of a flexible material which is at least molded, arranged by an adhesive-, fusion-, clamping- or plug-connection on the covering element (21), the frame (16) or the flexible area (26).

10. Planar form according to claim 8 or 9, **characterized in that** the reset means (33) has a hardness of 50 to 80 Shore.

11. Planar form according to any one of the preceding claims, **characterized in that** the at least one covering element (21) and the frame (16) at least partially surrounding the reach-through opening (14) is formed as an injection molded part.

12. Planar form according to any one of the preceding claims, **characterized in that** the at least one covering element (21) and the frame (16) at least partially surrounding the reach-through opening (14) are manufactured by a single- or multicomponent injection molding method.

13. Planar form according to any one of the preceding claims, **characterized in that** at least one top side of the covering element (21) or the frame (16) comprises a coating which is equivalent to that which is adjacent to the reach-through opening (14).

14. Planar form according to claim 13, **characterized in that** the surface of the at least one covering element (21) or the frame (16) is varnished or comprises a foil or planar material corresponding to the planar form.

15. Planar form according to any one of the preceding claims, **characterized in that** the covering element (21) connected with a frame part (17, 18) is fastened with another frame part (18, 17) by means of a detachable or permanent connection to the reach-through opening (14).

## Revendications

1. Structure plane, en particulier cache-coffre pour un véhicule automobile, comportant un orifice de préhension (14) qui peut être fermé au moins partiellement par un élément de recouvrement (21) qui est mobile entre au moins une position déplacée qui dégage l'orifice de préhension (14) et une position de fermeture qui recouvre l'orifice de préhension (14), **caractérisée en ce que** l'au moins un élément de recouvrement (21) présente une zone élastique en flexion (26).

2. Structure plane selon la revendication 1, **caractérisée en ce que** l'au moins un élément de recouvrement (21) est associé à un cadre (16) en matière thermoplastique ou duroplastique qui entoure au moins partiellement l'orifice de préhension (14).

3. Structure plane selon la revendication 1 ou 2, **caractérisée en ce que** l'au moins un élément de recouvrement (21) est réalisé de manière au moins partiellement élastique en flexion dans la zone d'une surface de préhension (19) libre.

4. Structure plane selon l'une des revendications précédentes, **caractérisée en ce que** l'au moins un élément de recouvrement (21) comporte un cadre (16) qui entoure au moins partiellement l'orifice de préhension (14) et est prévu par un assemblage amovible ou non amovible sur le cadre (16).

5. Structure plane selon la revendication 1, **caractérisée en ce que** l'au moins un élément de recouvrement (21) et un cadre (16) qui entoure au moins partiellement l'orifice de préhension (14) sont assemblés entre eux par une zone élastique en flexion (26).

6. Structure plane selon la revendication 5, **caractérisée en ce que** la zone élastique en flexion (26) se présente sous la forme d'un assemblage articulé, en particulier d'une charnière film.

7. Structure plane selon l'une des revendications précédentes, **caractérisée en ce que** l'au moins un élément de recouvrement (21) est assemblé à une partie supérieure ou inférieure (17, 18) du cadre (16).

8. Structure plane selon l'une des revendications précédentes, **caractérisée en ce que** l'au moins un élément de recouvrement (21) est maintenu dans une position de fermeture (22) par au moins un moyen de rappel (33) qui est prévu au moins sur le cadre (16), la zone élastique en flexion (26) ou l'élément de recouvrement (21).

9. Structure plane selon la revendication 8, **caractérisée en ce que** le moyen de rappel (33) est fabriqué en une matière élastique en flexion qui est disposée au moins sur l'élément de recouvrement (21), le cadre (16) ou la zone élastique en flexion (26) par injection, par assemblage par collage, par soudage, par serrage ou par emboîtement.

10. Structure plane selon la revendication 8 ou 9, **caractérisée en ce que** le moyen de rappel (33) présente une dureté de 50 à 80 shores.

11. Structure plane selon l'une des revendications précédentes, **caractérisée en ce que** l'au moins un élément de recouvrement (21) et le cadre (16) qui entoure au moins partiellement l'orifice de préhension (14) se présentent sous la forme d'une pièce moulée par injection.

12. Structure plane selon l'une des revendications précédentes, **caractérisée en ce que** l'au moins un élément de recouvrement (21) et le cadre (16) qui entoure au moins partiellement l'orifice de préhension (14) peuvent être fabriqués par un procédé de moulage par injection à un composant ou à plusieurs composants.

13. Structure plane selon l'une des revendications précédentes, **caractérisée en ce qu'**au moins une face supérieure de l'élément de recouvrement (21) ou du cadre (16) présente un revêtement qui correspond à celui qui est adjacent à l'orifice de préhension (14).

14. Structure plane selon la revendication 13, **caractérisée en ce que** la surface de l'au moins un élément de recouvrement (21) ou du cadre (16) est enduite ou comporte une feuille ou un produit plan correspondant à la structure plane.

15. Structure plane selon l'une des revendications précédentes, **caractérisée en ce qu'**un élément de recouvrement (21) assemblé à une partie du cadre (17, 18) est fixé à une autre partie du cadre (18, 17) par un assemblage amovible ou non amovible avec l'orifice de préhension (14).
